# EUROPEAN PATENT APPLICATION

(11) **EP 4 184 310 A1**
(43) Date of publication of application: **24.05.2023**
(21) Application number: 21855504.3
(22) Date of filing: 10.08.2021
(51) Int. Cl.: G06F 3/16

(54) **VOLUME RECOMMENDATION METHOD AND APPARATUS, DEVICE AND STORAGE MEDIUM**

(30) Priority: 10.08.2020 CN 202010798452
(71) Applicant: BEIJING BYTEDANCE NETWORK TECHNOLOGY CO., LTD., Beijing 100041 (CN)
(72) Inventor: SHANG, Chuxiang, Beijing 100190 (CN)
(74) Representative: Dentons UK and Middle East LLP
(86) International application number: PCT/CN2021/111660
(87) International publication number: WO 2022/033452

(57) **Abstract**

Provided in the present disclosure are a volume recommendation method and apparatus, a device, and a storage medium, relating to the technical field of artificial intelligence, the method comprising: acquiring features corresponding to the playback operation of any audio/video file by a user, the features reflecting the playback habits of the user; inputting the features into a user volume recommendation model and, after processing by the volume recommendation model, outputting a recommended volume for the user; the volume recommendation model is a machine learning model obtained by performing training on the basis of the corresponding relationship between features and volume settings in the historical audio/video playback behaviour of the user. The present disclosure can effectively reduce volume discomfort, enhancing the user experience.

## Description

This application claims the priority to Chinese Patent Application No. 202010798452.4 titled "VOLUME RECOMMENDATION METHOD AND APPARATUS, DEVICE AND STORAGE MEDIUM", filed on August 10, 2020 with the China National Intellectual Property Administration (CNIPA), which is incorporated herein by reference in its entirety.

### FIELD

The present disclosure relates to the technical field of artificial intelligence, in particular to a method, a device and an apparatus for recommending a volume, and a storage medium.

### BACKGROUND

Normally, when a user plays an audio and/or video file, an initial playing volume may not be too high or too low, and the user may not adapt to the initial playing volume. Especially when an application scenario is changed, for example, when a video is played at night instead of during the day, the user is normally required to adjust a volume key of a device such as a mobile phone or a headphone according to own listening habit, to determine a suitable volume. Before manually adjusting the volume, the user has been affected by discomfort of the volume, which has a poor experience.

### SUMMARY

In order to solve the above technical problem or at least partially solve the above technical problem, a method, a device and apparatus for recommending a volume and a storage medium are provided according to the present disclosure, to effectively reduce discomfort of the volume and improve the experience of the user.

A method for recommending a volume is provided according to the present disclosure. The method includes: acquiring a feature corresponding to a playing operation for an audio and/or video file by a user, where the feature represents a playing habit of the user; and inputting the feature into a volume recommendation model of the user, and processing the feature by the volume recommendation model to output a volume recommended for the user, where the volume recommendation model is a machine learning model acquired by training based on a correspondence between a feature and a volume setting in historical audio and/or video playing behavior of the user.

In an embodiment, the feature includes a playing scenario feature, and the playing scenario feature includes at least one of a playing time and a playing location.

In an embodiment, the feature further includes an attribute feature of the audio and/or video file and/or a feature of a playing device, where the attribute feature of the audio and/or video file includes volume information of the audio and/or video file, and/or type information of the audio and/or video file; and the feature of the playing device includes a connection state of the playing device to an output device, and/or a type of the playing device.

In an embodiment, before the inputting the feature into a pre-generated volume recommendation model, and processing the feature by the volume recommendation model to output a volume recommended for the user, the method further includes: acquiring a playing habit of the user for the audio and/or video file, where the playing habit includes playing device information for the audio and/or video file and/or attribute information of the audio and/or video file, and playing scenario information and playing volume information of the audio and/or video file, where the playing scenario information includes playing time information and/or playing location information; and generating the volume recommendation model of the user based on the playing habit through machine learning.

In an embodiment, the generating the volume recommendation model of the user based on the playing habit through machine learning includes clustering information in the acquired playing habit of the user for the audio and/or video file to acquire the volume recommendation model of the user.

In an embodiment, the generating the volume recommendation model of the user based on the playing habit through machine learning includes: classifying the information in the playing habit by using the playing volume information in the acquired playing habit of the user for the audio and/or video file as a target, to acquire the volume recommendation model of the user.

In an embodiment, the method further includes playing the audio and/or video file at the volume recommended for the user.

In an embodiment, the method further includes displaying the volume recommended for the user; and playing the audio and/or video file at the volume in response to a confirmation operation on the volume.

In an embodiment, after the displaying the volume recommended for the user, the method further includes: adjusting the volume recommended for the user, to acquire an adjusted volume; and playing the audio and/or video file at the adjusted volume in response to a confirmation operation on the adjusted volume.

A device for recommending a volume is provided according to the present disclosure. The device includes: an acquiring module configured to acquire a feature corresponding to a playing operation for an audio and/or video file by a user, where the feature represents a playing habit of the user; and a recommending module configured to input the feature into a volume recommendation model of the user, process the feature by the volume recommendation model to output a volume recommended for the user, where the volume recommendation model is a machine learning model acquired by training based on a correspondence between a feature and a volume setting in historical audio and/or video playing behaviors of the user.

A computer-readable storage medium is provided according to the present disclosure. The computer-readable storage medium stores instructions, and the instructions, when executed on a terminal device, cause the terminal device to perform the method described above.

An apparatus is provided according to the present disclosure. The apparatus includes a memory, a processor, where a computer program is stored in the memory and is executable on the processor. The processor, when executing the computer program, performs the method described above.

Compared with the conventional technology, the technical solutions according to the embodiments of the present disclosure have the following advantages.

A method, a device and an apparatus for recommending a volume and a storage medium are provided according to the embodiments of the present disclosure. A feature corresponding to a playing operation for an audio and/or video file by a user is acquired. The feature represents a playing habit of the user. Then, the feature is inputted into a volume recommendation model of the user, and processed by the volume recommendation model to output volume recommended for the user. The volume recommendation model is a machine learning model acquired by training based on a correspondence between the feature and a volume setting in historical audio and/or video playing behaviors of the user. In the method for recommending the volume according to the embodiment, the volume recommendation model is acquired by training based on the correspondence between the playing scenario feature and the volume setting in the historical audio and/or video playing behaviors of the user, which can well reflect a volume corresponding to a playing scenario feature. Thus, the volume outputted by the volume recommendation model processing features such as the playing scenario feature can greatly match the current playing scenario feature of the user, and the recommended volume conforms to a playing habit of the user, to effectively reduce the discomfort of the volume without manual adjustment, thereby improving the experience of the user.

### BRIEF DESCRIPTION OF THE DINITIALINGS

The drawings herein are incorporated into the specification and constitute a part of the specification. The drawings show embodiments of the present disclosure. The drawings and the specification are used to explain the principle of the present disclosure.

In order to more clearly illustrate technical solutions in embodiments of the present disclosure or in the conventional technology, the drawings to be used in the description of the embodiments or the conventional technology are briefly described below. Apparently, those skilled in the art may obtain other drawings according to the provided drawings without any creative work.
Figure 1 is a flow chart of a method for recommending a volume according to an embodiment of the present disclosure;
Figure 2 is a flow chart of a method for generating a volume recommendation model according to an embodiment of the present disclosure;
Figure 3 is a structural block diagram of a device for recommending a volume according to an embodiment of the present disclosure; and
Figure 4 is a structural block diagram of an apparatus for recommending a volume according to an embodiment of the present disclosure.

### DETAILED DESCRIPTION OF EMBODIMENTS

In order to make the purposes, features, and advantage of the present disclosure more apparent and easy to understand, the technical solutions in the embodiments of the present disclosure are further described hereinafter. It should be noted that the embodiments of the present disclosure and the features in the embodiments may be combined with each other if there is no conflict.

In the following detailed description, numerous specific details are set forth in order to provide thorough understanding of the present disclosure. The present disclosure may also be implemented in other ways different from those described here. Apparently, the embodiments in the specification are only a part of the embodiments of the present disclosure, rather than all the embodiments.

Normally, a user may not adapt to an initial playing volume when playing an audio and/or video file, and is required to manually adjust a volume, resulting in a poor experience of user. A method, a device and an apparatus for recommending a volume, and a storage medium are provided according to embodiments of the present disclosure. The technology may be applied to devices that can play audio and/or video, such as, a mobile phone, a tablet computer, a wearable device, a headphone, and a computer. To facilitate understanding, embodiments of the present disclosure are described in detail below.

### First Embodiment

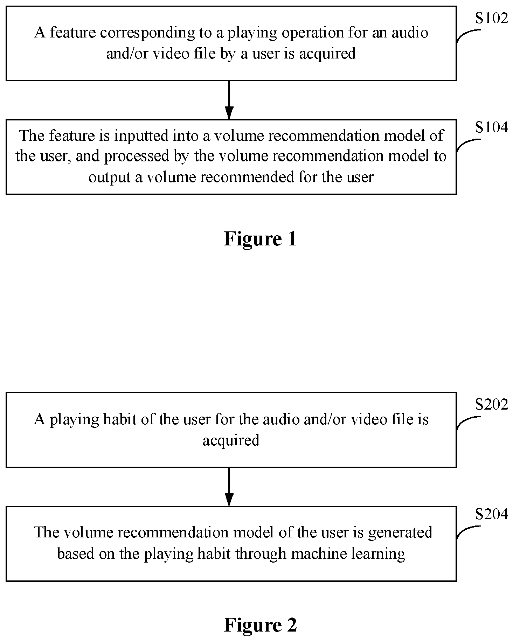

Figure 1 is a flow chart of a method for recommending a volume according to an embodiment of the present disclosure. As shown in Figure 1, the method may include the following steps S 102 and S 104.

In step S102, a feature corresponding to a playing operation for an audio and/or video file by a user is acquired.

When the player plays the audio and/or video file, a user acquires the feature corresponding to the current playing operation. The feature may include but not limited to: a playing scenario feature, an attribute feature of the audio and/or video file, and a feature of a playing device.

The playing scenario feature represents a scenario feature of playing with a speaker, playing with headphones, different playing time, or different playing locations. Taking the scenario feature of a playing location as an example, location information may be acquired when the user performs the playing operation on the audio and/or video file, and the location information is determined as the scenario feature of the playing location.

The attribute feature of the audio and/or video file includes volume information and/or type information of the audio and/or video file. The volume information includes a maximum volume, an effective volume, audio coding, and monaural/stereo sound of the audio and/or video file. The type information of the audio and/or video file includes music type information such as pop, rock, hip-hop, classical and folk music; and video type information such as variety show, game, live broadcast and sports.

The feature of the playing device includes a connection state of the playing device to an output device and a type of the playing device. The output device includes a headphone and sound equipment. The type of the playing device includes a type of a mobile phone and a type of a headphone.

In step S104, the feature is inputted into a volume recommendation model of the user, and processed by the volume recommendation model to output a volume recommended for the user.

The volume recommendation model is a machine learning model acquired by training based on a correspondence between features and volumes in historical audio and/or video playing behaviors of the user. When the acquired feature is the playing scenario feature, the volume recommendation model is a machine learning model acquired by training based on a correspondence between the playing scenario feature and a volume setting in historical audio and/or video playing behaviors of the user, which can greatly reflect a volume corresponding to a playing scenario feature. Thus, the volume outputted by the volume recommendation model processing the above features can well meet the requirements of the user. In practices, the volume recommendation model may be a machine learning model, such as a convolutional neural network (CNN), a linear classifier, and the like.

In addition, after the volume recommendation model outputs the volume recommended for the user, the method further includes: playing the audio and/or video file at the volume recommended for the user.

In the method for recommending the volume according to an embodiment of the present disclosure, the volume recommendation model processes the feature corresponding to the playing operation to output the volume recommended for the user. The volume recommendation model is acquired by training based on the correspondence between the playing scenario feature and the volume setting in the historical audio and/or video playing behaviors of the user, which can well reflect the volume corresponding to the playing scenario feature. Thus, the volume outputted by the volume recommendation model processing features such as the playing scenario feature can greatly match the current playing scenario feature of the user, and conform to a playing habit of the user. In this way, the discomfort of the volume without manual adjustment is effectively reduced, and thus the experience of the user is improved.

In order to directly apply the volume recommendation model to a volume recommendation, the model may be generated in advance based on machine learning, so that the volume recommendation model generated based on machine learning has an expected volume recommendation effect. As shown in Figure 2, a method for generating a volume recommendation model is provided according to an embodiment. The method may be performed before the above step S 104, and includes the following steps S202 and S204.

In step S202, a playing habit of the user for the audio and/or video file is acquired.

In an embodiment, the playing habit may be acquired in the following ways. That is, when the user plays an audio and/or video file, the following acquiring operations are performed.
(1) It is detected whether the playing device is connected to an output device. If the playing device is not connected to the output device, the type of the playing device is determined. If the playing device is connected to the output device, the type of the playing device and the type of the connected output device (such as the headphone) are determined. Different types of playing devices (such as different brands of mobile phones) have different hardware structures, and different types of output devices have different hardware structures. Thus, in a process of playing the audio and/or video file with the same volume key, different types of playing devices or different types of output device may actually play the audio and/or video file at different volumes. In addition, different users have different requirements for the volume. Based on this, the type of the playing device and/or the type of the output device may be acquired as the playing habit.
(2) Playing time information is recorded. The user usually plays the audio and/or video file in different ways at different time instants. For example, different volumes are used at different time instants, such as the audio and/or video file is played by setting a low volume at work hours or at night. Different types of audio and/or video files are played at different time instants, such as TV drama is played at lunch time. The audio and/or video files may be played at different time instants by using a speaker or an external headphone, such as the audio and/or video file may be played by the speaker during off hours, which are not listed herein. Based on this, the playing time information may be recorded as the playing habit.
(3) Playing location information is acquired through positioning. A way in which the user plays the audio and/or video file is related to a location of the user. For example, the user sets a low volume to play the audio and/or video file, in a company. Based on this, the playing location information may be recorded as the playing habit.
(4) Type information of the audio and/or video file is recognized. For example, an audio and/or video file such as rock and sports events has a relatively warm atmosphere, and the user normally sets a high volume to play the audio and/or video file. An audio and/or video file such as documentary and classical music is required to be played at a low volume. Based on this, the type information of the audio and/or video file may be recorded as the playing habit.
(5) Volume information of the audio and/or video file is recognized, information such as a volume, an effective volume, an average power, audio coding, and monaural/stereo sound of the audio and/or video file. The volume information of the audio and/or video file is an important privacy that affects a playing volume of a device, and thus serves as the playing habit.
(6) The volume determined by the user adjusting the volume key is recorded to obtain playing volume information, and the playing volume information serves as the playing habit.

Based on the above acquiring operations, the playing habit in the embodiment includes, but is not limited to at least one of the following: playing device information for the audio and/or video file and/or attribute information of the audio and/or video file, and playing scenario information and playing volume information of the audio and/or video file. The playing scenario information includes playing time information and/or playing location information. The playing device information includes a connection state of the playing device to an output device, a type of the playing device and a type of the connected output device when the playing device is connected to the output device, and a type of the playing device when the playing device is not connected to the output device. The attribute information of the audio and/or video file includes volume information, and/or type information of the audio and/or video file.

In step S204, the volume recommendation model of the user is generated based on the playing habit through machine learning.

In practices, the above multiple playing habits are inputted into a to-be-trained volume recommendation model as sample data. The playing habits are acquired when the user plays audio and/or video files, and thus the playing habits belong to the historical audio and/or video playing behaviors of the user. Therefore, based on the acquired playing habits, the volume recommendation model may learn the correspondence between the features and the volume settings in the historical audio and/or video playing behaviors of the user. The feature may include the playing scenario feature, the attribute feature of the audio and/or video file, and the feature of the playing device.

In an embodiment, the machine learning may be unsupervised learning on the sample data. In such case, the volume recommendation model of the user may be generated by: clustering information acquired from the playing habit of the user for the audio and/or video file, to acquire the volume recommendation model of the user.

In an embodiment, information on the playing habits of the audio and/or video file serve as the sample data. The information may include information of the playing device, volume information, type information, playing time information, playing location information, playing volume information. The similarity among the sample data is calculated in a predetermined clustering algorithm (such as an association rule algorithm), and the sample data whose similarity reaches a predetermined threshold are grouped into a category, to acquire multiple information sets. It can be understood that information of the playing habits within one information set has high similarity, while information of the playing habits in different information sets has low similarity. A correspondence between the playing scenario feature and the playing volume information is extracted from information of the playing habits by using the clustered information sets. The volume recommendation model recommends a volume that meets the requirements of the user by learning the above correspondence.

In another embodiment, the machine learning may be supervised learning on the sample data. In such case, the volume recommendation model of the user may be generated by: determining the playing volume information in the acquired playing habit of the user for the audio and/or video file as a target; and classifying information in the playing habits, to acquire the volume recommendation model of the user.

In an embodiment, the acquired playing habits of the user for the audio and/or video file serve as the sample data, and the playing volume information in the playing habits serves as a label of the sample data. Supervised learning is performed on the above sample data to acquire the volume recommendation model of the user. In addition, volumes corresponding to the same playing scenario feature may be not exactly the same, which may change in a small volume range. Thus, volumes within the volume range are adapted to the user in the playing scenario. Therefore, in an embodiment, playing volume information within a predetermined volume range may further serve as the label of the sample data.

The above process of generating the volume recommendation model based on the sample data with the label may further be understood as: inputting the sample data with the label into the to-be-trained volume recommendation model, training the model to acquire the trained volume recommendation model. In this way, the volume recommendation model recommends a volume that meets the requirements of the user in actual production applications.

Compared with the process of unsupervised learning, the sample data for learning has labels in the above process of supervised learning, that is, the playing volume information is extracted from each piece of sample data, and the extracted playing volume information serves as a label of the piece of the sample data. Thus, the learning effect is great, and the volume recommended by the model has high accuracy.

Based on the volume recommendation model acquired through machine learning, during the actual use of the model, a playing scenario feature corresponding to the current played audio and/or video file, an attribute feature of the audio and/or video file, a feature of the playing device are acquired, and then the volume recommendation model processes the above features, to output a volume corresponding to the above features which is recommended for the user. In the embodiment, the volume recommendation model recommends the appropriate volume for the user, so that the user is not required to manually adjust the volume every time, which improves the experience of the user. In this way, user viscosity for the application (APP) and the number of times of opening APP by the user are increased, and a consumption duration is prolonged.

After the volume recommended for the user is outputted, the audio and/or video file may be directly played at the volume recommended for the user, to greatly simplify operations of the user. In addition, a method for displaying and confirming the volume may further be provided according to the embodiment, which may include the following operations.

First, the volume recommended for the user is displayed. Specifically, after the volume recommended for the user is outputted through the method for recommending the volume, the volume recommended for the user may be displayed on a graphical user interface on a terminal device in a form of a bar or a pop-up window.

After the volume is displayed, if the volume conforms to the playing habit of the user, the following steps may be performed: playing the audio and/or video file at the volume in response to a confirmation operation on the volume. The confirmation operation may be a click operation, a tap operation, and the like. The user may confirm the volume recommended for the user on the graphical user interface by using a finger of the user or a stylus. The terminal device plays the audio and/or video file at the volume recommended for the user in response to a reception of the confirmation operation on the volume.

After the volume is displayed, if the volume does not conform to the playing habit of the user, the volume may be adjusted by the following operations.
1) The volume recommended for the user is adjusted, to acquire an adjusted volume. The volume may be adjusted in multiple ways, for example, in response to an adjustment operation on the volume. The adjustment operation may be an operation that the user sets a target volume. In response to this operation, the volume recommended for the user is adjusted to the target volume of the user based on the adjustment operation to acquire the adjusted volume. Alternatively, the adjustment operation may be an operation that the user turns up or down the volume. In response to this operation, the volume recommended for the user may be turned up or down based on the adjustment operation to acquire the adjusted volume.
2) In response to a confirmation operation on the adjusted volume, the audio and/or video file is played at the adjusted volume.

In the embodiment, the volume recommended for the user is displayed, adjusted and confirmed, which can improve the flexibility of volume operation and comfort of experience of the user during playing of the audio and/or video.

In summary, in the method for recommending the volume according the above embodiment of the present disclosure, the volume recommendation model processes the feature corresponding to the playing operation, to output the volume recommended for the user. When the acquired feature is the playing scenario feature, the volume recommendation model is acquired by training based on the correspondence between the playing scenario feature and the volume setting in the historical audio and/or video playing behaviors of the user, which can well reflect a volume corresponding to a playing scenario feature. Thus, the volume outputted by the volume recommendation model processing features such as the playing scenario feature can greatly match the current playing scenario feature of the user, and the recommended volume conforms to a playing habit of the user, to effectively reduce the discomfort of the volume without manual adjustment, thereby improving the user experience.

### Second Embodiment

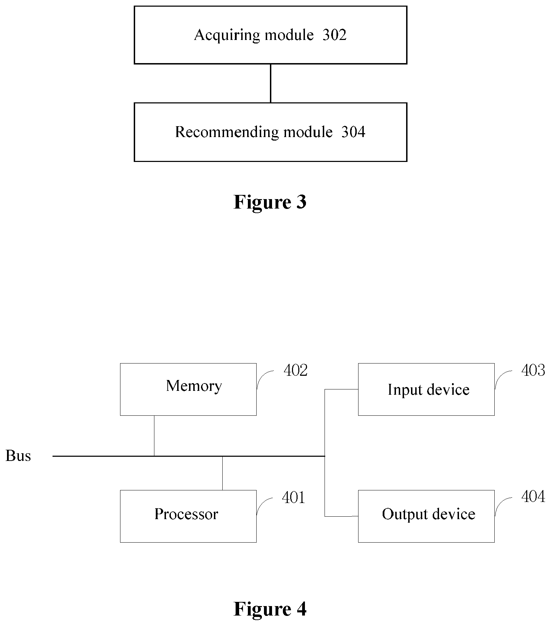

A device for recommending a volume is provided according to an embodiment, and is configured to implement the method for recommending the volume according to the above embodiments. As shown in Figure 3, the device for recommending the volume includes an acquiring module 302 and a recommending module 304.

The acquiring module 302 is configured to acquire a feature corresponding to a playing operation for an audio and/or video file by a user, where the feature represents a playing habit of the user.

The recommending module 304 is configured to input the feature into a volume recommendation model of the user; and process the feature by the volume recommendation model, to output a volume recommended for the user. The volume recommendation model is a machine learning model acquired by training based on a correspondence between the feature and a volume setting in historical audio and/or video playing behaviors of the user.

In the device for recommending the volume according to the embodiment of the present disclosure, the volume recommendation model processes the feature corresponding to the playing operation to output the volume recommended for the user. The volume recommendation model is acquired by training based on the correspondence between the playing scenario feature and the volume setting in the historical audio and/or video playing behaviors of the user, which can well reflect a volume corresponding to a playing scenario feature. Thus, the volume outputted by the volume recommendation model processing features such as the playing scenario feature can greatly match the current playing scenario feature of the user, to effectively reduce the discomfort of the volume without manual adjustment, thereby improving the experience of the user.

In an embodiment, the feature includes a playing scenario feature, and the playing scenario feature includes a playing time and/or a playing location.

In an embodiment, the feature further includes an attribute feature of the audio and/or video file and/or a feature of a playing device. The attribute feature of the audio and/or video file includes volume information of the audio and/or video file, and/or type information of the audio and/or video file; and the feature of the playing device includes a connection state of the playing device to an output device and/or a type of the playing device.

In an embodiment, the device for recommending the volume further includes a learning module (not shown in Figure 3). The learning module is configured to acquire a playing habit of the user for the audio and/or video file, where the playing habit includes playing device information for the audio and/or video file and/or attribute information of the audio and/or video file, playing scenario information and playing volume information of the audio and/or video file, and the playing scenario information includes playing time information and/or playing location information; and generate the volume recommendation model of the user based on the playing habit through machine learning.

In an embodiment, the learning module is specifically configured to cluster information in the acquired playing habit of the user for the audio and/or video file, to acquire the volume recommendation model of the user.

In an embodiment, the learning module is specifically configured to classify the information in the playing habit by using the playing volume information in the acquired playing habit of the user for the audio and/or video file as a target, to acquire the volume recommendation model of the user.

In an embodiment, the device for recommending the volume further includes a playing module (not shown in Figure 3). The playing module is configured to play the audio and/or video file at the volume recommended for the user.

In an embodiment, the device for recommending the volume further includes a volume determination module (not shown in Figure 3). The volume determination module is configured to display the volume recommended for the user; and play the audio and/or video file at the volume in response to a confirmation operation on the volume.

In an embodiment, the volume determination module is further configured to adjust the volume recommended for the user, to acquire an adjusted volume; and play the audio and/or video file at the adjusted volume in response to a confirmation operation on the adjusted volume.

Implementation principles and technical effects of the device according to the embodiment are the same as those in the first embodiment of the foregoing method. For a brief description, for parts not described in the embodiment, reference is made to the corresponding contents in the first embodiment of the foregoing method.

Based on the foregoing embodiment, a computer-readable storage medium is provided according to an embodiment. The computer-readable storage medium stores instructions. The instructions, when executed on a terminal device, cause the terminal device to perform the method for recommending the volume according to the first embodiment.

In addition, an apparatus for recommending a volume is further provided according to an embodiment of the present disclosure. As shown in Figure 4, the apparatus includes a processor 401, a memory 402, an input device 403 and an output device 404. The number of the processor 401 in the apparatus for recommending the volume may be one or more. For example, as shown in Figure 4, the number of the processor is one. In some embodiments of the present disclosure, the processor 401, the memory 402, the input device 403 and the output device 404 may be connected to each other through a bus or other ways, and the connection through a bus is taken as an example in Figure 4.

The memory 402 may be configured to store a software program and a module. The processor 401 runs the software program and the module stored in the memory 402, to perform various functional applications and data processing of the device for recommending a volume. The memory 402 may mainly include a program memory area and a data memory area. The program memory area may store an operating system, an application required by at least one function and the like. In addition, the memory 402 may include a high-speed random access memory, and may further include a non-volatile memory, such as at least one disk storage device, a flash device or other volatile solid-state storage device. The input unit 403 may be configured to receive inputted number or character information, and input a signal related to user settings and function control of the device for recommending the volume.

In the embodiment, the processor 401 may load an executable file corresponding to the processes of one or more application programs into the memory 402 in response to an instruction, and the processor 401 runs the application program stored in the memory 402, thereby achieving various functions in the method for recommending a volume described above.

It should be noted that the terms "first", "second" and the like in the description are used for distinguishing an entity or operation from another entity or operation, rather than requiring or implying an actual relationship or order between these entities or operations. In addition, terms of "include", "comprise" or any other variants are intended to be non-exclusive. Therefore, a process, method, article or device including a series of elements includes not only the elements but also other elements that are not enumerated, or also include the elements inherent for the process, method, article or device. Unless expressively limited otherwise, an element defined by a statement of "comprising (including) one..." does not exclude a case that other similar elements exist in the process, method, article or device including the element.

The above are only specific implementations of the present disclosure, so that those skilled in the art can understand or implement the present disclosure. It is apparent for those skilled in the art to make many modifications to these embodiments. The general principle defined herein may be applied to other embodiments without departing from the scope of the present disclosure. Therefore, the present disclosure is not limited to the embodiments illustrated herein, but should be defined by the broadest scope consistent with the principle and novel features disclosed herein.

## Claims

1. A method for recommending a volume, comprising:
acquiring a feature corresponding to a playing operation for an audio and/or video file by a user, wherein the feature represents a playing habit of the user; and
inputting the feature into a volume recommendation model of the user, and processing the feature by the volume recommendation model to output a volume recommended for the user, wherein the volume recommendation model is a machine learning model acquired by training based on a correspondence between a feature and a volume setting in historical audio and/or video playing behaviors of the user.

2. The method according to claim 1, wherein the feature comprises a playing scenario feature, and the playing scenario feature comprises a playing time and/or a playing location.

3. The method according to claim 2, wherein the feature further comprises an attribute feature of the audio and/or video file, and/or a feature of a playing device,
wherein the attribute feature of the audio and/or video file comprises volume information of the audio and/or video file, and/or type information of the audio and/or video file; and
the feature of the playing device comprises a connection state of the playing device to an output device and/or a type of the playing device.

4. The method according to any one of claims 1 to 3, wherein before the inputting the feature into a pre-generated volume recommendation model, and processing the feature by the volume recommendation model to output a volume recommended for the user, the method further comprises:
acquiring a playing habit of the user for the audio and/or video file, wherein the playing habit comprises playing device information for the audio and/or video file and/or attribute information of the audio and/or video file, and playing scenario information and playing volume information of the audio and/or video file; and
generating the volume recommendation model of the user based on the playing habit through machine learning.

5. The method according to claim 4, wherein the generating the volume recommendation model of the user based on the playing habit through machine learning comprises:
clustering information in the acquired playing habit of the user for the audio and/or video file, to acquire the volume recommendation model of the user.

6. The method according to claim 4, wherein the generating the volume recommendation model of the user based on the playing habit through machine learning comprises:
classifying information in the playing habit by using the playing volume information in the acquired playing habit of the user for the audio and/or video file as a target, to acquire the volume recommendation model of the user.

7. The method according to claim 1, further comprising:
playing the audio and/or video file at the volume recommended for the user.

8. The method according to claim 1, further comprising:
displaying the volume recommended for the user; and
playing the audio and/or video file at the volume in response to a confirmation operation on the volume.

9. The method according to claim 8, wherein after the displaying the volume recommended for the user, the method further comprises:
adjusting the volume recommended for the user, to acquire an adjusted volume; and
playing the audio and/or video file at the adjusted volume in response to a confirmation operation on the adjusted volume.

10. A device for recommending a volume, comprising:
an acquiring module configured to acquire a feature corresponding to a playing operation for an audio and/or video file by user, wherein the feature represents a playing habit of the user; and
a recommending module configured to input the feature into a volume recommendation model of the user, and process the feature by the volume recommendation model to output a volume recommended for the user, wherein the volume recommendation model is a machine learning model acquired by training based on a correspondence between a feature and a volume setting in historical audio and/or video playing behaviors of the user.

11. A computer-readable storage medium, wherein the computer-readable storage medium stores instructions, and the instructions, when executed on a terminal device, cause the terminal device to perform the method according to any one of claims 1 to 9.

12. An apparatus, comprising:
a memory;
a processor; and
a computer program stored in the memory and executed on the processor, wherein
the processor, when executing the computer program, performs the method according to any one of claims 1 to 9.
